**Europäisches Patentamt**

**European Patent Office**

**Office européen des brevets**

(19)

(11) Veröffentlichungsnummer: **0 286 704**
**B1**

## EUROPÄISCHE PATENTSCHRIFT

(12)

(45) Veröffentlichungstag der Patentschrift:
**19.09.90**

(21) Anmeldenummer: **87105521.6**

(22) Anmeldetag: **14.04.87**

(51) Int. Cl.⁵: **F28D 7/08**, F16N 39/02

(54) Wärmetauscher für zwei fluide Medien.

(43) Veröffentlichungstag der Anmeldung:
**19.10.88 Patentblatt 88/42**

(45) Bekanntmachung des Hinweises auf die Patenterteilung:
**19.09.90 Patentblatt 90/38**

(84) Benannte Vertragsstaaten:
**AT BE CH DE ES FR GB GR IT LI NL SE**

(56) Entgegenhaltungen:
**DE-A- 3 508 834**
**DE-C- 348 289**
**DE-C- 681 276**
**DE-C- 3 605 825**

(73) Patentinhaber: **Ing. Walter Hengst GmbH & Co. KG,
Nienkamp 75, D-4400 Münster(DE)**

(72) Erfinder: **Baumann Dieter Dipl. Ing.,
Ueberwasserstrasse 10, D-Greven-Gimbte(DE)**

(74) Vertreter: **Schulze Horn, Stefan, Dipl.-Ing. M.Sc.,
Goldstrasse 36, D-4400 Münster(DE)**

ACTORUM AG

## Beschreibung

Die Erfindung betrifft einen Wärmetauscher für zwei fluide Medien, insbesondere Flüssigkeiten, mit einem mit einem Deckel verschließbarem Gehäuse mit Zu- und Abläufen fur die beiden Medien und mit einem Einsatz für die getrennte Führung der beiden Medien unter Wärmeaustausch, wobei zumindest der Einsatz als Druckgußteil herstellbar ist.

Ein derartiger Wärmetauscher ist aus der DE-A 3 508 834 bekannt.

Ein weiterer Wärmetauscher der genannten Art ist in einem nicht veröffentlichten Vorschlag der Anmelderin beschrieben (Deutsche Patentanmeldung P 35 42 721.3, veröffentlicht am 4.6.1987). Bei diesem Wärmetauscher werden die Kanäle für die Führung der beiden Medien durch einen im Druckgußverfahren herstellbaren Einsatz gebildet und reichen in ihrer Höhe über die gesamte Höhe des Einsatzes. Für einen wirkungsvollen Wärmeaustausch müssen die Wandungen der Kanäle möglichst dünn und die Weite der Kanäle, d. h. der Abstand benachbarter Wandungen, möglichst klein sein, denn nur so werden vorteilhaft kurze Wärmeleitwege erreicht. Bei dem Wärmetauscher gemäß dem oben angegebenen älteren Vorschlag ergibt sich der große Nachteil, daß die Erfüllung der gerade beschriebenen Forderung dazu führt, daß der Einsatz je nach Ausführung nur schwer oder nicht mehr wirtschaftlich herstellbar ist. Dies beruht darauf, daß das Verhältnis von Wandungshöhe zu Wandungsdicke bzw. Wandungsabstand sehr groß wird und daß damit die Fließstrecken für das Gußmetall und die Entformungsstrecken sehr lang werden. Beim Gießvorgang kommt es so sehr leicht zu einer unvollständigen Füllung der Gußform und damit zu hohen Ausschußquoten bei der Produktion. Die langen Entformungsstrecken erfordern bei der Entformung die Anwendung hoher Kräfte, was die Gefahr von Beschädigungen des dünnwandigen Gußteils und damit ebenfalls eine Erhöhung des Ausschußanteiles mit sich bringt.

Es stellt sich daher die Aufgabe, einen Wärmetauscher der eingangs genannten Art zu schaffen, der die aufgeführten Nachteile vermeidet und der insbesondere gunstige gießtechnische Eigenschaften aufweist. Weiterhin soll ein wirkungsvoller Wärmeaustausch zwischen den beiden Medien sichergestellt werden und der Wärmetauscher soll auf einfache Weise an unterschiedliche Verwendungen anpaßbar sein.

Die Lösung dieser Aufgabe gelingt erfindungsgemäß durch einen Wärmetauscher der eingangs genannten Art, bei welchem der Einsatz im wesentlichen aus einem die Kanäle fur die beiden Medien in Form von hohen, schmalen Kammern bildenden, mäandrierend verlaufenden Wandungszug gebildet ist, wobei benachbarte Kammern abwechselnd von dem einen und dem anderen Medium durchströmt sind, und bei welchem die Kammern jeweils durch eine gemeinsame, mit dem Wandungszug einstückige, alle Kammern in der Höhe unterteilende Zwischenwandung in nacheinander durchströmte, in zwei Ebenen angeordnete Teilkammern geteilt sind.

Mit der beschriebenen Ausgestaltung des Einsatzes wird vorteilhaft erreicht, daß die Entformungsstrecken und die Fließstrecken für das die Wandungen bildende Gußmetall, vorzugsweise Aluminium oder Aluminiumlegierung, des Einsatzes wesentlich verkürzt werden. Insbesondere kann die mit dem Wandungszug einstückige Zwischenwandung in der Gußform als zentraler Fließweg fur das in die Form einschießende Gußmetall verwendet werden. Hierdurch reduziert sich der Fließweg für das Gußmetall bei ansonsten etwa gleichbleibenden Dimensionen des Einsatzes auf die Hälfte der vorherigen Länge, so daß die Herstellung weitestgehend problemlos wird.

Um die die Teilkammern nacheinander durchströmenden Medien auf möglichst einfache und unaufwendige Weise von einer Teilkammer in die nächste zu führen, ist vorgesehen, daß wenigstens in den Kammern für eines der beiden Medien die Zwischenwandung unter Freilassung von an einem Ende der Kammern gelegenen Durchlaßöffnungen ausgebildet ist. Da fur diese Öffnungen nur ein kleiner Teil der Zwischenwandung beansprucht wird, ergibt sich hieraus keinerlei Nachteil für die gußtechnische Herstellung des Einsatzes.

Zur Erzielung eines möglichst einfachen Aufbaues und zur Gewährleistung eines effektiven Wärmeaustausches zwischen den Medien sind die Zuläufe und die Abläufe für die beiden Medien jeweils uber einen Verteilerkanal bzw. einen Sammelkanal mit den stirnseitigen Enden der Teilkammern einer Ebene verbunden. Hierdurch erfolgt eine Verteilung der Ströme auf eine Anzahl von Teilkammern, in welchen der Wärmeaustausch im wesentlichen stattfindet, sowie eine daran anschließende Zusammenführung der Teilströme der beiden Medien. Bei entsprechender Durchflußrichtung ergibt sich vorteilhaft ein weitgehend reiner Gegenstrom der beiden Medien.

Eine ergänzende Möglichkeit zur Sicherstellung eines wirkungsvollen Wärmeaustausches besteht darin, den Fließweg zumindest eines der beiden Medien zu verlängern. Eine Ausführung des Wärmetauschers sieht hierzu vor, daß die Teilkammern für eines der beiden Medien durch parallel zu der Zwischenwandung verlaufende Trennwände jeweils unter Freilassung einer der Zu- bzw. Ablaufseite abgewandten Durchlaßöffnung in in vier Ebenen angeordnete Teilkammern unterteilt sind. Bei gleichem Durchsatz des betreffenden Mediums ergibt sich eine etwa doppelt so lange Verweilzeit im Wärmetauscher bzw. bei gleichbleibender Verweilzeit kann der Durchsatz etwa verdoppelt werden.

Weiterhin ist bei der vorangehend beschriebenen Ausführung vorgesehen, daß die Teilkammern der beiden mittleren Ebenen jeweils über einen außerhalb des Einsatzes angeordneten Überströmkanal miteinander in Strömungsverbindung stehen. Dies bietet den Vorteil, daß bei einer Ausgestaltung des Wärmetauschers gemäß dieser Ausführung das Hauptbauteil, nämlich der Einsatz, nicht geändert zu werden braucht. Die Änderungen bestehen lediglich im nachträglichen Einsetzen der zusätzlichen Trennwände und der Anordnung des externen Überströmkanals. Eine besonders vorteilhafte und in der Herstellung günstige Realisierung dieser Ausführung wird dadurch erreicht, daß Zulauf, Verteilerkanal, Überströmkanal, Sammelkanal und Ablauf für das die in den vier Ebenen angeordnete Teilkammern durchströmende Medium in den Deckel integriert sind. Hierüber hinaus können auch die zusätzlichen Trennwände mit dem Deckel einstückig ausgeführt sein, was sich anbietet, da auch der Deckel im Druckgußverfahren herstellbar ist.

Für das andere, den Wärmetauscher durchströmende Medium sind zweckmäßig Zulauf, Verteilerkanal, Sammelkanal und Ablauf in den Boden des Gehäuses integriert. Hiermit wird ebenfalls erreicht, daß bei unterschiedlichen Verwendungen mit z. B. geänderten Lagen von Zu- und/oder Ablauf des Wärmetauschers lediglich der Gehäuseboden entsprechend anzupassen ist, während der Einsatz unverändert bleiben kann. Dies ermöglicht eine flexible Verwendung des Wärmetauschers in vielen Anwendungsgebieten.

Schließlich wird noch eine weitere Ausführungsform vorgeschlagen, mit welcher die Anpassungsfähigkeit des Wärmetauschers, hier vor allem an unterschiedliche Eigenschaften der Medien, erhöht wird. Diese Ausführungsform besteht darin, daß einzelne Mäander des mäandrierend verlaufenden Wandungszuges wenigstens im Bereich des Verteilerkanals und des Sammelkanals für eines der beiden Medien verkürzt ausgebildet sind und daß die beiden benachbarten, unverkürzten Mäander jeweils stirnseitig über eine im Abstand von der Stirnwandung des betreffenden verkürzten Mäanders angeordnete, mit dem Wandungszug einstückige, zugleich den Verteilerkanal bzw. den Sammelkanal begrenzende Stirntrennwand unter Aussparung einer Einströmöffnung vom Verteilerkanal und einer Ausströmoffnung zum Sammelkanal verbunden sind. Hiermit kann für eines der Medien oder auch für beide Medien der Fließweg im Wärmetauscher erheblich verlängert werden.

Welche der möglichen Ausführungen des Wärmetauschers im konkreten Anwendungsfall zum Einsatz kommt, hängt von mehreren Faktoren, wie z. B. geforderter Durchsatz, Wärmeleitfähigkeit der Medien, deren Viskosität usw. ab und richtet sich nach dem jeweiligen Einzelfall. Aufgrund seiner gießtechnisch günstigen Herstellbarkeit und seiner flexiblen Anpaßbarkeit ist der Wärmetauscher für eine Vielzahl von Anwendungen geeignet.

Ein bevorzugtes Ausführungsbeispiel der Erfindung wird im folgenden anhand einer Zeichnung näher erläutert. Die Figuren der Zeichnung zeigen im einzelnen:

Figur 1 einen Wärmetauscher gemäß Erfindung im Horizontalschnitt,
Figur 2 den Wärmetauscher aus Figur 1 in Frontansicht bei abgenommenem Deckel,
Figur 3 den Wärmetauscher aus Figur 1 im Vertikalschnitt entlang der Linie III,
Figur 4 den Wärmetauscher aus Figur 1 im Vertikalschnitt entlang der Linie IV,
Figur 5 den Wärmetauscher aus Figur 1 im Vertikalschnitt entlang der Linie V und

Figur 6 den Wärmetauscher aus Figur 1 im Vertikalschnitt entlang der Linie VI.

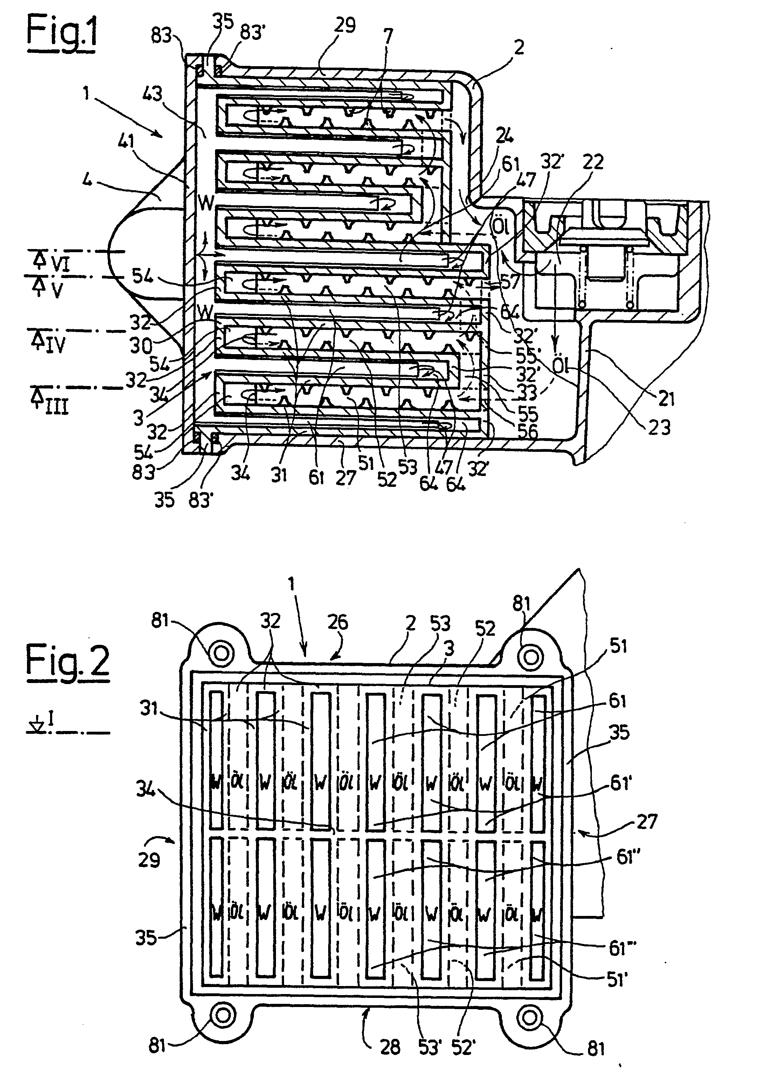

Das in der Figur 1 dargestellte Ausführungsbeispiel des Wärmetauschers 1 ist ein Wasser-Öl-Wärmetauscher, der beispielsweise für wassergekühlte Verbrennungsmotoren verwendbar ist. Wie die Figur 1 zeigt, besteht der Wärmetauscher 1 im wesentlichen aus einem Gehäuse 2, einem in dieses eingesetzten Einsatzes 3 und einem das Gehäuse 2 verschließenden Deckel 4. Das Gehäuse 2 weist einen Boden 21 sowie vier Seitenwände auf, von welchen in der vorliegenden Schnittdarstellung die Wände 27 und 29 sichtbar sind. Unter Boden wird hier die deckelabgewandte Seite des Gehäuses 2 verstanden, ohne daß hierdurch die Lage des Wärmetauschers im Raum festgelegt werden soll. Dessen Lage ist vielmehr völlig beliebig und richtet sich lediglich nach den vorhandenen räumlichen Gegebenheiten.

Der Einsatz 3 wird im wesentlichen aus einem mäandrierenden Wandungszug 30 gebildet, der sich aus parallel zueinander verlaufenden Längswandungen 31 und aus diese wechselseitig an den Stirnenden verbindenden Stirnwandungen 32 und 32′ zusammensetzt. Hierdurch werden zwischen den Wandungen jeweils einander abwechselnd Kammern für die beiden Medien geschaffen, für das eine Medium, hier Öl, z. B. die Kammern 51 bis 53 und für das andere Medium, hier Wasser, beispielsweise die Kammern 61.

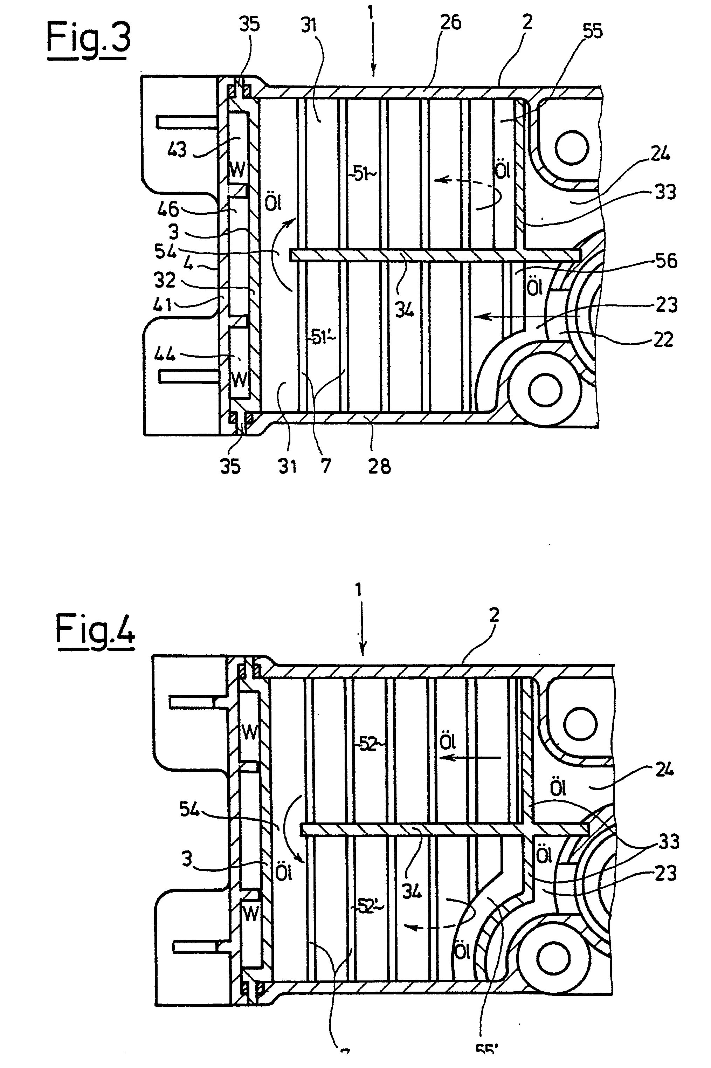

Bodenseitig sind einige Mäander des Wandungszuges 30 verkürzt ausgebildet, d. h. die betreffende Stirnwandung 32′ ist gegenüber den benachbarten Stirnwandungen 32′ zurückversetzt. Gleichzeitig sind die benachbarten Stirnwandungen 32′ über eine Stirntrennwand 33 miteinander verbunden. Diese Stirntrennwand 33 begrenzt zusammen mit dem Bodenteil 21 des Gehäuses 2 einen Verteilerkanal 23 für das Öl, das durch einen Zulauf 22 z. B. vom Motor kommend dort hin gelangt, sowie einen Sammelkanal 24 für das Öl, von wo aus es durch einen Ablauf (nicht dargestellt) abgeführt wird. Aus dem Verteilerkanal 23 gelangt ein Teil des einströmenden Öles durch eine Einströmöffnung 56 in die dem Wärmeaustausch dienenden Kammern, die in ihrem Aufbau anhand der Figuren 3 bis 5 noch näher beschrieben werden. Nach dem Durchströmen der Kammern gelangt das Öl durch eine Ausströmöffnung 57, die ebenfalls in der Stirntrennwand 33 angeordnet ist, in den Sammelkanal 24, von wo aus es, wie bereits erwähnt, zu dem nicht dargestellten Ablauf gelangt.

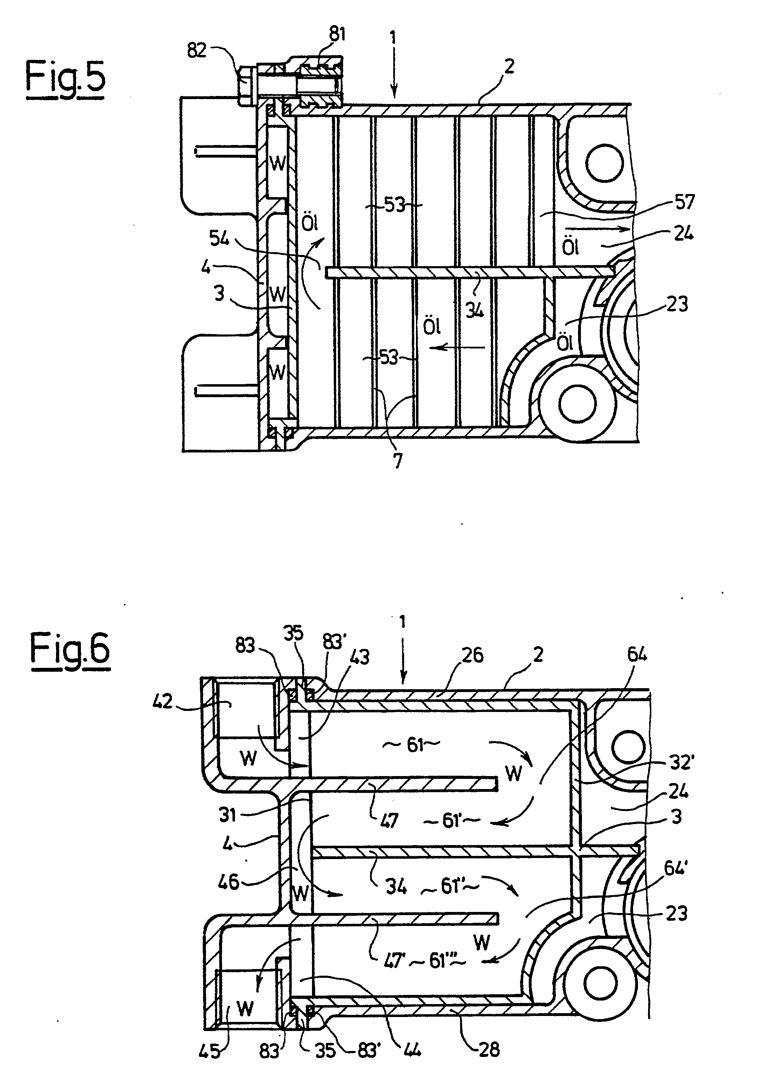

An der gegenüberliegenden Seite des Einsatzes 3, d. h. im Bereich des Deckels 4, ist ein Verteilerkanal 43 für das Wasser erkennbar, das sich von dort in die wasserführenden Kammern 61 verteilt. Der Aufbau der wasserführenden Kammern 61 wird an späterer Stelle anhand der Figur 6 noch näher erläutert.

In Figur 2, die eine Frontansicht des Einsatzes 3 des Wärmetauschers 1 bei abgenommenem Deckel 4 zeigt, ist besonders deutlich die Anordnung der Kammern für die beiden Medien in zwei Ebenen zu erkennen. Die beiden Ebenen werden voneinander getrennt durch eine Zwischenwandung 34, die senkrecht zu den Längswandungen 31 und parallel zu den Stirnwandungen 32 des mäandrierenden Wandungszuges verläuft. Durch die Zwischenwandung 34 wird die ursprüngliche Höhe der Kammern halbiert und es entstehen die in den zwei Ebenen angeordneten Teilkammern. Die ölführenden Kammern, von denen in der Figur die Kammern 51 bis 53 in der oberen Ebene und die Kammern 51' bis 53' in der unteren Ebene beispielhaft beziffert sind, sind deckelseitig fest verschlossen, während die wasserführenden Kammern deckelseitig offen sind. Die wasserführenden Kammern sind in beiden Ebenen nochmals nach je zwei Teilkammern unterschieden, wobei in der oberen Ebene die Teilkammern mit 61 und 61' beziffert sind, während in der unteren Ebene die Teilkammern mit 61" und 61''' beziffert sind. Wie anhand von Figur 6 noch näher erläutert werden wird, erfolgt die räumliche Trennung der wasserführenden Kammern durch zwischen die Teilkammern 61 und 61' bzw. 61" und 61''' eingeschobene Trennwände 47, welche mit dem Deckel 4 vorzugsweise einstückig ausgeführt sind. Aus diesem Grunde sind in der Figur 2 diese Trennwände nach Abnahme des Deckels 4 nicht mehr sichtbar.

Weiterhin ist in der Figur 2 der umlaufende Rand 35 des Einsatzes 3 zu erkennen, mit welchem der Einsatz 3 auf dem oberen Rand des Gehäuses 2 mit seinen Seitenwänden 26 bis 29 aufliegt. Auf dem Umfang des Gehäuses 2 und des Randes 35 verteilt sind vier Gewindebohrungen 81 angeordnet, in welche Schrauben zur Verbindung von Deckel 4, Einsatz 3 und Gehäuse 2 miteinander einschraubbar sind.

Die Figuren 3 bis 5 zeigen eine Folge von Vertikalschnitten durch den Wärmetauscher 1, die jeweils durch benachbarte ölführende Kammern gelegt sind. Der in Figur 3 gezeigte Schnitt verläuft entlang der Linie III in Figur 1, der Schnitt in Figur 4 entlang der Linie IV in Figur 1 und der Schnitt in Figur 5 entlang der Linie V in Figur 1.

Die Figur 3 zeigt - ebenso wie die Figuren 4 und 5 - das Gehäuse 2 des Wärmetauschers 1 mit seinen Seitenwänden 26 und 28, den Einsatz 3 mit seinem umlaufenden Rand 35 und den das Gehäuse 2 verschließenden und den Einsatz 3 zwischen sich und dem Gehäuse 2 einklemmenden Deckel 4. Im Deckel 4 sind wasserführende Kanäle 43, 46 und 44 zu erkennen, deren Funktion später noch erläutert werden wird. Im Einsatz 3 ist eine der Längswandungen 31 erkennbar. Senkrecht zu dieser verläuft in deren Mitte die Zwischenwandung 34, wodurch sich eine ölführende Kammer 51 in der oberen Ebene und eine Kammer 51' in der unteren Ebene ergeben.

Im folgenden soll anhand der Figur 3 und der beiden folgenden Figuren der Fließweg des Öls durch den Wärmetauscher beispielhaft erläutert werden. Wie in Figur 3 im unteren rechten Teil erkennbar ist, gelangt das Öl aus dem Zulauf 22 durch den Verteilerkanal 23 und die Einströmöffnung 56 zunächst in die Kammer 51' in der unteren Ebene. Nach deren Durchströmung gelangt das Öl am deckelseitigen Ende der Kammer 51' durch die Durchlaßöffnung 54 in die darüberliegend angeordnete Kammer 51. Von dort strömt das Öl durch die Übertrittsöffnung 55 in die in Blickrichtung des Schnittes gesehen dahinterliegende nächste ölführende Kammer. Der unmittelbare Rückfluß des Öls in den Sammelkanal 24 ist dabei durch die Stirntrennwand 33 ausgeschlossen.

In Figur 4 läßt sich der weitere Weg des Öls durch den Wärmetauscher verfolgen. Nachdem das Öl die Kammer 51 in der oberen Ebene durch die Übertrittsöffnung 55 verlassen hat (siehe Figur 3), gelangt es in die parallel zur Kammer 51 angeordnete Kammer 52, ebenfalls in der oberen Ebene. Nach dem Durchströmen dieser Kammer 52 gelangt das Öl wiederum durch eine Durchlaßöffnung 54 in die Kammer 52', die unterhalb der Kammer 52 in der unteren Ebene angeordnet ist. Diese Kammer verläßt das Öl durch die Übertrittsöffnung 55', die am bodenseitigen Ende der Kammer 52' angeordnet ist und durch die Stirntrennwand 33 vom Verteilerkanal 23 für das Öl abgeteilt ist.

Wie aus Figur 5 ersichtlich ist, gelangt das Öl aus der Übertrittsöffnung 55' kommend in die Kammer 53' in der unteren Ebene, nach deren Durchströmung es wiederum durch eine weitere Durchlaßöffnung 54 in die darüber angeordnete Kammer 53 gelangt. Nach deren Durchströmung schließlich gelangt das Öl durch die Ausströmöffnung 57 in den Sammelkanal 24, von wo aus es zum Ablauf, z. B. zur Motorölwanne, gelangt.

Wie aus den Figuren 3 bis 5 ersichtlich ist, ist die Länge des Fließweges des Öls im dargestellten Ausführungsbeispiel etwa sechsmal so groß wie die Länge einer einzelnen Ölkammer, so daß ein intensiver Wärmeaustausch gewährleistet ist.

Aus Figur 5 ist weiterhin noch die Verbindung von Gehäuse 2, Einsatz 3 und Deckel 4 mittels einer durch den Deckel 4 und den Einsatz 3 in eine Gewindebohrung 81 im Gehäuse 2 eingeschraubten Schraube 82 erkennbar.

Figur 6 schließlich zeigt einen Schnitt durch den Wärmetauscher, der parallel zu den Schnitten in den Figuren 3 bis 5 entlang der Linie VI in Figur 1 verläuft, diesmal jedoch durch eine Anordnung von wasserführenden Kammern. Wie die Figur 6 zeigt, erfolgt die Wasserführung durch eine Folge von vier übereinander angeordneten Teilkammern 61 bis 61'''. Die mittlere Trennwand ist die bereits erwähnte Zwischenwandung 34, die mit dem Einsatz 3 einstückig ausgeführt ist und sich auch durch die ölführenden Kammern zieht. Zusätzlich zu der Zwischenwandung 34 sind zu beiden Seiten von dieser weitere Trennwände 47 und 47' angeordnet, die mit dem Deckel 4 einstückig ausgeführt sind. Das Wasser gelangt durch einen Zulauf 42 im Deckel 4 zunächst in den Verteilerkanal 43. Von dort verteilt sich das Wasser auf die wasserführenden Kammern, wobei ein Teilstrom des Wassers in die in Figur 6 dargestellte Teilkammer 61 strömt. Nach deren Durchströmung gelangt das Wasser am deckelabgewandten Ende der Kammer 61 durch eine Durchlaßöffnung 64 in die darunterliegende nächste Kammer 61'. Aus dieser Kammer strömt das Wasser durch einen in den Deckel integrierten Überströmkanal 46 in die nächste, wiederum nach unten folgende Kammer 61" und von dort durch eine weitere Durchlaßöffnung 64' in die zu unterst angeordnete Kammer 61'''. Von dort strömt das Wasser über einen Sammelkanal 44 zu einem Ablauf 45. An den deckelabgewandten Enden sind die Kammern 61 bis 61''' jeweils durch Stirnwandungen 32' gegen den Verteilerkanal 23 und den Sammelkanal 24 für das Öl abgegrenzt.

Wie aus den Figuren ersichtlich ist, kann es nicht zu einer Vermischung von Öl und Wasser im Wärmetauscher 1 kommen, da die einzige während des Zusammenbaus der einzelnen Teile herzustellende Dichtstelle am umlaufenden Rand 35 des Einsatzes 3 liegt. Innerhalb des Einsatzes 3 bzw. des Gehäuses 2 sind Öl und Wasser immer durch durchgehende Wandungen voneinander separiert. Die Dichtung am umlaufenden Rand 35 des Einsatzes 3 erfolgt zweckmäßig durch elastische Dichtringe 83 und 83'. Sollte an dieser Stelle eine Undichtigkeit auftreten, so kann das betreffende Medium lediglich zur Außenseite des Gehäuses 2 strömen, nicht jedoch in einen das andere Medium führenden Kanal gelangen. Somit werden Vermischungen der beiden Medien und damit zusammenhängende mögliche schädliche Folgen sicher vermieden.

Wie aus den Figuren 1 und 3 bis 5 erkennbar ist, sind im Ausführungsbeispiel des Wärmetauschers 1 auf den die Öl führenden Kammern begrenzenden Wandungen vorspringende, quer zur Strömungsrichtung des Öls verlaufende Rippen 7 angeordnet. Diese sorgen für eine turbulente Strömung des durchfließenden Öls und so für einen intensiven Wärmeaustausch und Wärmetransport innerhalb des fließenden Öls. Die Ausbildung eines fur einen guten Wärmeaustausch nachteiligen Temperaturgradienten innerhalb des strömenden Öles wird so sicher vermieden.

Außer wie im dargestellten Ausfuhrungsbeispiel mit zwei parallel geschalteten Dreiergruppen von ölführenden Kammeranordnungen kann der Wärmetauscher auch mit einer größeren Anzahl von Kammern ausgeführt werden. In seiner Anwendung kann der Wärmetauscher sowohl als separates Bauteil als auch in Kombination mit anderen Teilen, z. B. dem Ölfilter eines Verbrennungsmotors, eingesetzt werden.

**Patentansprüche**

1. Wärmetauscher (1) für zwei fluide Medien, insbesondere Flüssigkeiten, mit einem mit einem Deckel (4) verschließbarem Gehäuse (2) mit Zu- und Abläufen für die beiden Medien und mit einem Einsatz (3) für die getrennte Führung der beiden Medien unter Wärmeaustausch, wobei zumindest der Einsatz (3) als Druckgußteil herstellbar ist,
dadurch gekennzeichnet, daß der Einsatz (3) im wesentlichen aus einem die Kanäle für die beiden Medien in Form von hohen, schmalen Kammern (51 - 53, 51' bis 53'; 61 - 61''') bildenden, mäandrierend verlaufenden Wandungszug (30) gebildet ist, wobei benachbarte Kammern (51 - 53, 51' - 53'; 61 - 61''') abwechselnd von dem einen und dem anderen Medium durchströmt sind, und daß die Kammern (51 - 53, 51' - 53'; 61 - 61''') jeweils durch eine gemeinsame, mit dem Wandungszug (30) einstückige, alle Kammern (51 - 53, 51' - 53'; 61 - 61''') in der Höhe unterteilende Zwischenwandung (34) in nacheinander durchströmte, in zwei Ebenen angeordnete Teilkammern (51 - 53, 51' - 53'; 61 - 61''') geteilt sind.

2. Wärmetauscher nach Anspruch 1, dadurch gekennzeichnet, daß wenigstens in den Kammern (51 - 53, 51' - 53') für eines der beiden Medien die Zwischenwandung (34) unter Freilassung von einem Ende der Kammern (51 - 53, 51' - 53') gelegenen Durchlaßöffnungen 80 (54) ausgebildet ist.

3. Wärmetauscher nach Anspruch 1 oder 2, dadurch gekennzeichnet, daß die Zuläufe (22; 42) und die Abläufe (25; 45) für die beiden Medien jeweils über einen Verteilerkanal (23; 43) bzw. einen Sammelkanal (24; 44) mit den stirnseitigen Enden der Teilkammern (51 - 53, 61 bzw. 51'-53'; 61'') einer Ebene verbunden sind.

4. Wärmetauscher nach den Ansprüchen 1 bis 3, dadurch gekennzeichnet, daß die Teilkammern (61, 61'; 61'', 61''') für eines der beiden Medien durch parallel zu der Zwischenwandung (34) verlaufende Trennwände (47, 47') jeweils unter Freilassung einer der Zu- bzw. Ablaufseite abgewandten Durchlaßöffnung (64, 64') in in vier Ebenen angeordnete Teilkammern (61, 61', 61'', 61''') unterteilt sind.

5. Wärmetauscher nach Anspruch 4, dadurch gekennzeichnet, daß die Teilkammern (61', 61'') der beiden mittleren Ebenen jeweils über einen außerhalb des Einsatzes (3) angeordneten Überströmkanal (46) miteinander in Strömungsverbindung stehen.

6. Wärmetauscher nach den Ansprüchen 4 und 5, dadurch gekennzeichnet, daß Zulauf (42), Verteilerkanal (43), Überströmkanal (46), Sammelkanal (44) und Ablauf (45) für das die in den vier Ebenen angeordneten Teilkammern (61 - 61''') durchströmende Medium in den Deckel (4) integriert sind.

7. Wärmetauscher nach den Ansprüchen 1 bis 6, dadurch gekennzeichnet, daß Zulauf (22), Verteilerkanal (23), Sammelkanal (24) und Ablauf (25) für das die in zwei Ebenen angeordneten Teilkammern (51 - 53, 51' - 53') durchströmende Medium in den Boden (21) des Gehäuses (2) integriert sind.

8. Wärmetauscher nach den Ansprüchen 1 bis 7, dadurch gekennzeichnet, daß einzelne Mäander des mäandrierend verlaufenden Wandungszuges (30) wenigstens im Bereich des Verteilerkanals (23) und des Sammelkanals (24) für eines der beiden Medien verkürzt ausgebildet sind und daß die beiden benachbarten, unverkürzten Mäander jeweils stirnseitig über eine im Abstand von der Stirnwandung (32') des betreffenden verkürzten Mäanders angeordnete, mit dem Wandungszug (30) einstückige, zugleich den Verteilerkanal (23) bzw. den Sammelkanal (24) begrenzende Stirntrennwand (33) unter Aussparung einer Einströmöffnung (56) vom Verteilerkanal (23) und einer Ausströmöffnung (57) zum Sammelkanal (24) verbunden sind.

**Claims**

1. A heat exchanger (1) for two fluid media, in particular liquids, having a housing (2) which can be closed by a cover (4) and which has inlets and outlets for the two media and an insert (3) for the separate guidance of the two media under heat exchange, at least the insert (3) being able to be manufactured as a diecast part, characterised in that the insert (3) is substantially formed of a meandering length of wall (30) forming the channels for the two media in the form of high, narrow chambers (51–53, 51′ to 53′; 61–61‴), one and the other medium flowing alternately through adjoining chambers (51–53, 51′–53′; 61–61‴), and that the chambers (51–53, 51′ to 53′; 61–61‴) are each divided into partial chambers (51–53, 51′ to 53′; 61–61‴), arranged on two levels and through which the media flow consecutively, by a common intermediate wall (34) which is integral with the length of wall (30) and subdivides all the chambers (51–53, 51′ to 53′; 61–61‴) in the vertical plane.

2. A heat exchanger according to Claim 1, characterised in that the intermediate wall (34) at least in the chambers (51–53, 51′–53′) for one of the two media is constructed leaving passage openings (54) at one end of the chambers (51–53, 51′–53′).

3. A heat exchanger according to Claim 1 or 2, characterised in that the inlets (22; 42) and the outlets (25; 45) for the two media are each connected to the end faces of the partial chambers (51–53, 61 or 51′–53′; 61‴) of one level by a distribution channel (23; 43) or a collecting channel (24; 44) respectively.

4. A heat exchanger according to Claims 1 to 3, characterised in that the partial chambers (61, 61′; 61″, 61‴) for one of the two media are subdivided into partial chambers (61, 61′, 61″, 61‴) arranged on four levels by partitions (47, 47′) running parallel to the intermediate wall (34), in each case leaving a passage opening (64, 64′) which is remote from the inlet or outlet side respectively.

5. A heat exchanger according to Claim 4, characterised in that the partial chambers (61′, 61″) of the two middle levels are each in flow connection with each other through an overflow channel (46) arranged outside the insert (3).

6. A heat exchanger according to Claims 4 and 5, characterised in that the inlet (42), distribution channel (43), overflow channel (46), collecting channel (44) and outlet (45) for the medium flowing through the partial chambers (61–61‴) which are arranged on the four levels are integrated in the cover (4).

7. A heat exchanger according to Claims 1 to 6, characterised in that the inlet (22), distribution channel (23), collecting channel (24) and outlet (25) for the medium flowing through the partial chambers (51–53, 51′–53′) which are arranged on two levels are integrated in the base (21) of the housing (2).

8. A heat exchanger according to Claims 1 to 7, characterised in that individual meanders of the meandering length of wall (30) are shortened at least in the region of the distribution channel (23) and the collecting channel (24) for one of the two media, and that the two adjacent, non-shortened meanders are each connected on their end faces via an end partition (33) which is arranged at a distance from the end wall (32′) of the relevant shortened meander and which is integral with the length of wall (30) and at the same time delimits the distribution channel (23) or the collecting channel (24) respectively, leaving an inlet opening (56) from the distribution channel (23) and an outlet opening (57) to the collecting channel (24).

## Revendications

1. Echangeur de chaleur (1) pour deux milieux fluides, en particulier des liquides, comprenant un boîtier (2) pouvant être fermé par un couvercle (4) et comportant des arrivées et des évacuations pour les deux milieux et un insert (3) destiné à guider séparément les deux milieux en assurant un échange de chaleur, l'insert (3) au moins pouvant être fabriqué par moulage sous pression, caractérisé en ce que l'insert (3) est formé pour l'essentiel par un ensemble de parois (30) décrivant des méandres et constituant les canaux pour les deux milieux sous forme de chambres hautes et étroites (51 à 53, 51′ à 53′; 61 à 61‴), des chambres voisines (51 à 53, 51′ à 53′; 61 à 61‴) étant parcourues alternativement par l'un et l'autre des milieux et en ce que les chambres (51 à 53, 51′ à 53′; 61 à 61‴) sont divisées par une paroi intermédiaire (34) commune, formant une seule pièce avec l'ensemble de parois (30) et divisant toutes les chambres (51 à 53, 51′ à 53′; 61 à 61‴) en hauteur pour former des chambres partielles (51 à 53, 51′ à 53′; 61 à 61‴) disposés sur deux niveaux et parcourues successivement.

2. Echangeur de chaleur selon la revendication 1, caractérisé en ce qu'au moins dans les chambres (51 à 53, 51′ à 53′) pour l'un des deux milieux, la paroi intermédiaire (34) est réalisée de manière à laisser libre des ouvertures de passage (54) situées à l'extrémité des chambres (51 à 53, 51′ à 53′).

3. Echangeur de chaleur selon la revendication 1 ou 2, caractérisé en ce que les arrivées (22; 42) et les évacuations (25; 45) pour les deux milieux sont reliées par un canal de distribution (23; 43) ou un canal collecteur (24; 44) aux extrémités frontales des chambres partielles (51 à 53, 61 ou 51′ à 53′; 61‴) d'un niveau.

4. Echangeur de chaleur selon les revendications 1 à 3, caractérisé en ce que les chambres partielles (61, 61′; 61″, 61‴) pour l'un des deux milieux sont divisées en chambres partielles (61, 61′, 61″, 61‴) disposées sur quatre niveaux par des parois de séparation (47, 47′) s'étendant parallèlement à la paroi intermédiaire (34) en laissant libre une ouverture de passage (64, 64′) opposée du côté arrivée ou évacuation.

5. Echangeur de chaleur selon la revendication 4, caractérisé en ce que les chambres partielles (61′, 61″) des deux niveaux médians communiquent entre elles pour l'écoulement par l'intermédiaire d'un canal de trop-plein (46) disposé à l'extérieur de l'insert (3).

6. Echangeur de chaleur selon les revendications 4 et 5, caractérisé en ce que l'arrivée (42), le canal de distribution (43), le canal de trop-plein (46), le canal collecteur (44) et l'évacuation (45) pour le milieu traversant les chambres partielles (61 à 61‴) disposées sur les quatre niveaux sont intégrés dans le couvercle (4).

7. Echangeur de chaleur selon les revendications 1 à 6, caractérisé en ce que l'arrivée (22), le canal de distribution (23), le canal collecteur (24) et l'évacuation (25) pour le milieu traversant les chambres partielles (51 à 53, 51' à 53') disposées sur deux niveaux sont intégrés dans le fond (21) du boîtier (2).

8. Echangeur de chaleur selon les revendications 1 à 7, caractérisé en ce que différents méandres de l'ensemble de parois (30) décrivant des méandres sont raccourcis au moins dans la zone du canal de distribution (23) et du canal collecteur (24) pour l'un des deux milieux et en ce que les deux méandres voisins non raccourcis sont reliés du côté frontal par l'intermédiaire d'une paroi frontale de séparation (33) qui est disposée à distance de la paroi frontale (32') du méandre raccourci concerné, est réalisée d'une seule pièce avec l'ensemble de parois (30) et limite simultanément le canal de distribution (23) et le canal collecteur (24) en laissant libre une ouverture d'admission (56) à partir du canal de distribution (23) et une ouverture d'évacuation (57) vers le canal collecteur (24).

Fig.1

Fig.2

## Fig.3

## Fig.4

Fig.5

Fig.6